# EUROPÄISCHE PATENTANMELDUNG

(11) **EP 0 872 415 A2**
(43) Veröffentlichungstag der Anmeldung: **21.10.1998**
(21) Anmeldenummer: 98102159.5
(22) Anmeldetag: 07.02.1998
(51) Int. Cl.: B64C 21/06

(54) **Verfahren zur Herstellung eines Strukturbauelementes mit definierter Perforation**

(30) Priorität: 18.04.1997 DE 19716182
(71) Anmelder: Daimler-Benz Aerospace Airbus Gesellschaft mit beschränkter Haftung, 21129 Hamburg (DE)
(72) Erfinder: Lutzer, Wilhelm, Dipl.-Ing., 22589 Hamburg (DE)
(74) Vertreter: Hansmann, Dierk, Dipl.-Ing.

(57) **Zusammenfassung**

Verfahren zur Herstellung eines Strukturbauelementes mit definierter Perforation, vorzugsweise zur Verwendung als Oberflächenbauelement für eine Laminarabsaugung im Tragflügelbereich eines Flugzeuges.

Ein erfindungsgemäßes technisch unaufwendiges und preiswertes Verfahren, durch welches ein Alternativmaterial zum lasergebohrten Titanblech hergestellt wird, ist durch folgende Verfahrensschritte gekennzeichnet:
- es wird ein CFK-Prepreg (1) durch ein dreidimensionales Verweben von mehreren getränkten CFK-Fasern (2) hergestellt,
- senkrecht zu den die flächenförmigen Hautoberflächen des Strukturbauelementes bildenden Oberflächen des CFK-Prepregs (1) werden Platzhalterfasern (4) aus einem Material mit einer Verdampfungstemperatur oberhalb der Aushärtungstemperatur des CFK-Prepregs (1) eingewebt,
- das CFK-Prepreg (1) wird in seine vorgegebene Form gebracht und bei etwa 120°C gehärtet, und
- nach dem Härten wird das CFK-Prepreg (1) weiter erwärmt, so daß die Materialien der Platzhalterfasern (4) rückstandslos in die Gasphase übergehen und somit die das CFK-Prepreg (1) in Richtung ihrer Oberflächen (3) durchdringenden Perforationskanäle geöffnet werden.

## Beschreibung

Die Erfindung betrifft ein Verfahren zur Herstellung eines Strukturbauelementes mit definierter Perforation, vorzugsweise zur Verwendung als Oberflächenbauelement für eine Laminarabsaugung im Tragflügelbereich eines Flugzeuges.

Aus der Aerodynamik ist es bekannt, daß eine laminare Umströmung von Trag- und Leitflächen den höchstmöglichen Auftrieb bei gleichzeitig geringstem Widerstand gegen die Anströmrichtung liefert. Häufig ist es aufgrund der gegebenen Profilform jedoch nicht möglich, für alle auftretenden Anströmbedingungen eine solche laminare Strömung zu gewährleisten. Selbst bei konstanten Anströmbedingungen kann sich die Strömung an Unstetigkeiten des Profils ablösen und turbulent werden mit der Folge verminderten Auftriebs und erhöhten Profilwiderstandes.

Wie weiterhin aus der Aerodynamik bekannt ist, kann durch kontinuierliches Absaugen der turbulenten Schicht eine weitgehende Laminarisierung der Strömung erreicht werden. Da unter Reiseflugbedingungen eine Widerstandsverminderung zugleich auch zu einer erheblichen Treibstoffersparnis und somit zu beträchtlichen wirtschaftlichen Vorteilen führt, wurde bereits versucht, durch das Anbringen von Absaugöffnungen im Tragflügel zu einer solchen Strömungslaminarisierung zu gelangen.

Aus der DE 44 36 748 C1 ist ein Verfahren zur Herstellung innerversteifter Hohlbauteile mit perforierter Wandung bekannt, die aus wenigstens zwei Deckblechen sowie zwischen diesen angeordneten Versteifungselementen bestehen. Zumindest eines der Deckbleche eines Bauteiles ist mit Perforationen versehen, wobei das Bauteil durch Innendruck- und Temperaturbeaufschlagung in eine umgebende Negativform expandiert wird. Zwischen dem perforierten Deckblech und den Versteifungselementen wird eine Dichtfolie angeordnet, die zumindest im Bereich der Perforationen in einem sich an den Umformprozeß anschließenden Arbeitsprozeß entfernt wird.

Weiterhin ist in der EP 0 532 093 B1 eine Tragfläche mit laminarer Strömungssteuerung beschrieben, wobei die Tragfläche mindestens einen ersten Bereich und einen zweiten Bereich aufweist. Der erste Bereich wird während des Fluges einem äußeren Luftdruck unterzogen, der größer ist als der äußere Luftdruck am genannten zweiten Bereich. Die Tragfläche besitzt eine eine obere und eine untere Hautoberfläche aufweisende äußere Haut mit einer Vielzahl von Perforationen. Mit der unteren Hautoberfläche ist ein Ansaugsystem verbunden, welches Luft durch die Perforationen in einer Richtung von der oberen Oberfläche zur unteren Oberfläche hindurchsaugt. Bei der Herstellung dieser vorbekannten Tragfläche ist vorgesehen, daß das Perforieren der äußeren Haut unter Benutzung eines Laserstrahles erfolgt.

Zur Absaugung der Grenzschicht mit dem Ziel der Verbesserung der Laminarisierung werden heute lasergebohrte Titanbleche verwendet. Diese Bleche sind außerordentlich teuer und nach dem Bohren sehr rißempfindlich. Die Gefahr der Rißbildung - und damit der Verlust eines Bleches - ist sehr groß, da die Bleche nur im ebenen Zustand gebohrt werden können und somit in einem späteren Arbeitsvorgang verformt werden müssen.

Der Erfindung liegt die Aufgabe zugrunde, ein technisch unaufwendiges und preiswertes Verfahren zu schaffen, durch welches ein Alternativmaterial zum lasergebohrten Titanblech hergestellt wird.

Die Aufgabe wird erfindungsgemäß durch folgende Verfahrensschritte gelöst:
- es wird ein CFK-Prepreg durch ein dreidimensionales Verweben von mehreren getränkten CFK-Fasern hergestellt,
- senkrecht zu den die flächenförmigen Hautoberflächen des Strukturbauelementes bildenden Oberflächen des CFK-Prepregs werden Platzhalterfasern aus einem Material mit einer Verdampfungstemperatur oberhalb der Aushärtungstemperatur des CFK-Prepregs eingewebt,
- das CFK-Prepreg wird in seine vorgegebene Form gebracht und bei etwa 120 °C gehärtet, und
- nach dem Härten wird das CFK-Prepreg weiter erwärmt, so daß die Materialien der Platzhalterfasern rückstandslos in die Gasphase übergehen und somit die das CFK-Prepreg durchdringenden Perforationskanäle geöffnet werden.

Durch das erfindungsgemäße Verfahren ist vorteilhafterweise die Herstellung eines Strukturbauelementes mit definierter Perforation möglich, ohne daß die Gefahr einer Rißbildung innerhalb des Bauelementes und damit sein Verlust besteht.

Ausgestaltungen des erfindungsgemäßen Verfahrens sind in den Unteransprüchen 2 bis 9 beschrieben, beispielsweise kann das Strukturbauelement nach dem Härten auf etwa 1400 °C pyrolysiert werden.

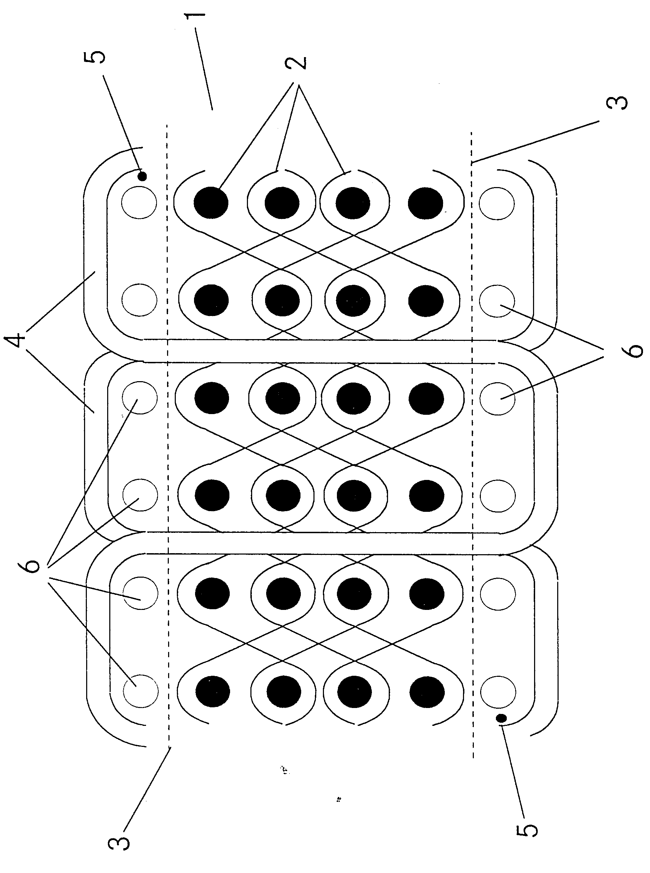

In der Zeichnung ist ein Ausführungsbeispiel nach der Erfindung dargestellt, und zwar zeigt die einzige Figur einen Längsschnitt durch ein CFK-Prepreg vor seiner Fertigstellung.

Das CFK-Prepreg 1 weist ein tragendes Gewebe aus mehreren getränkten CFK-Fasern 2 auf, welche durch ein dreidimensionales Verweben hergestellt ist. Senkrecht zu den Oberflächen 3 des CFK-Prepregs 1, die nach Fertigstellung des Strukturbauelementes seine flächenförmigen Hautoberflächen bilden, werden Platzhalterfasern 4 aus einem Material mit einer Verdampfungstemperatur, die über der Aushärtungstemperatur liegt, vorzugsweise in Kettrichtung der getränkten CFK-Fasern 2 eingewebt. Als Materialien für die Platzhalter 2 können z.B. Faserelemente aus POM (Polyoxymethylen / Polyformaldehyd oder Polyacetalharz), PMMA (Polymethylmethacrylat) oder PET (Polyäthylenterephthalat) verwendet werden.

Nach dem dreidimensionalen Verweben wird das CFK-Prepreg 1 in seine vorgegebene Form gebracht und bei etwa 120 °C gehärtet. Anschließend wird das CFK-Prepreg 1 weiter erwärmt, z. B. auf eine Anfangstemperatur von etwa 200 bis 300 °C, so daß die Materialien der Platzhalterfasern 2 rückstandslos in die Gasphase übergehen. Somit werden die das CFK-Prepreg 1 in Richtung ihrer Oberflächen 3 durchdringenden Perforationskanäle geöffnet. Das Strukturbauelement kann auch nach dem Härten auf etwa 1400 °C pyrolysiert werden.

Damit die hergestellten Perforationskanäle möglichst geradlienig und senkrecht zu den Oberflächen 3 verlaufen, können - wie aus der Zeichnung zu ersehen ist - auf den Oberflächen 3 des CFK-Prepregs 1 jeweils eine Lage 5 aus Platzhalterfasern 6 eingewebt werden. Diese Faser-Lagen 5, die parallel zu den Oberflächen 3 des CFK-Prepregs 1 liegen und von den Platzhalterfasern 4 durchdrungen sind, werden vor Fertigstellung des Strukturbauelementes entfernt. Vorteilhafterweise wird die Entfernung der Lagen 5 aus Platzhalterfasern 6 nach der Formgebung des CFK-Prepregs 1 im gleichen Arbeitsschritt mit den Platzhalterfasern 4 zur Herstellung der Perforationskanäle thermisch durchgeführt.

Es ist auch möglich, vor dem Härten des CFK-Prepregs 1 in seinen tieferen Lagen beheizbare Metallfasern einzuweben, mit deren Hilfe eine Enteisung des hergestellten Strukturbauelementes durchgeführt werden kann.

## Patentansprüche

1. Verfahren zur Herstellung eines Strukturbauelementes mit definierter Perforation, vorzugsweise zur Verwendung als Oberflächenbauelement für eine Laminarabsaugung im Tragflügelbereich eines Flugzeuges, gekennzeichnet durch folgende Verfahrensschritte:
- es wird ein CFK-Prepreg (1) durch ein dreidimensionales Verweben von mehreren getränkten CFK-Fasern (2) hergestellt,
- senkrecht zu den die flächenförmigen Hautoberflächen des Strukturbauelementes bildenden Oberflächen (3) des CFK-Prepregs (1) werden Platzhalterfasern (4) aus einem Material mit einer Verdampfungstemperatur oberhalb der Aushärtetungstemperatur des CFK-Prepregs eingewebt,
- das CFK-Prepreg (1) wird in seine vorgegebene Form gebracht und bei etwa 120 °C gehärtet, und
- nach dem Härten wird das CFK-Prepreg (1) weiter erwärmt, so daß die Materialien der Platzhalterfasern (4) rückstandslos in die Gasphase übergehen und somit die das CFK-Prepreg (1) in Richtung ihrer Oberflächen (3) durch dringenden Perforationskanäle geöffnet werden.

2. Verfahren nach Anspruch 1, dadurch gekennzeichnet, daß die Platzhalterfasern (4) in Kettrichtung der getränkten CFK-Fasern (2) verwebt werden.

3. Verfahren nach Anspruch 1, dadurch gekennzeichnet, daß das Strukturbauelement nach dem Härten auf etwa 1400 °C pyrolysiert wird.

4. Verfahren nach Anspruch 1, 2 oder 3, dadurch gekennzeichnet, daß als Material für die Platzhalterfasern (4) POM verwendet wird.

5. Verfahren nach Anspruch 1, 2 oder 3, dadurch gekennzeichnet, daß PMMA als Material für die Platzhalterfasern (4) verwendet wird.

6. Verfahren nach Anspruch 1, 2 oder 3, dadurch gekennzeichnet, daß als Material für die Platzhalterfasern (4) PET verwendet wird.

7. Verfahren nach Anspruch 1, 2, 3, 4, 5 oder 6, dadurch gekennzeichnet, daß auf den Oberflächen (3) des CFK-Prepregs (1) jeweils eine parallel zu den Oberflächen (3) liegende Lage (5) aus Platzhalterfasern (6) eingewebt wird, die von den das CFK-Prepreg (1) durchdringenden Platzhalterfasern (4) durchdrungen werden, und daß die Lagen (5) aus Platzhalterfasern (6) vor Fertigstellung des Strukturbauelementes entfernt werden.

8. Verfahren nach Anspruch 7, dadurch gekennzeichnet, daß die Lagen (5) aus Platzhalterfasern (6) nach der Formgebung des CFK-Prepregs (1) im gleichen Arbeitsschritt mit den Platzhalterfasern (4) für die Perforationskanäle thermisch entfernt werden.

9. Verfahren nach einem der Ansprüche 1 bis 8, dadurch gekennzeichnet, daß vor dem Härten des CFK-Prepregs (1) in seinen tieferen Lagen beheizbare und damit zur Enteisung des Strukturbauelementes verwendbare Metallfasern eingewebt werden.
